# EUROPÄISCHE PATENTSCHRIFT

(11) **EP 1 715 218 B1**
(45) Veröffentlichungstag und Bekanntmachung des Hinweises auf die Patenterteilung: **28.05.2008**
(21) Anmeldenummer: 06005801.3
(22) Anmeldetag: 22.03.2006
(51) Int. Cl.: F16H 41/24

(54) **Hydrodynamischer Drehmomentwandler**
Hydrodynamic torque converter
Convertisseur de couple hydrodynamique

(30) Priorität: 20.04.2005 DE 102005018223
(43) Veröffentlichungstag der Anmeldung: 25.10.2006
(73) Patentinhaber: LuK Lamellen und Kupplungsbau Beteiligungs KG, 77815 Bühl (DE)
(72) Erfinder: Maienschein, Stephan, 76534 Baden-Baden (DE)

(56) Entgegenhaltungen:
- DE-A1- 10 352 963
- DE-A1- 19 526 268
- DE-A1- 19 626 974
- DE-A1- 19 631 009
- DE-A1- 19 756 684
- US-A- 4 646 886
- US-A1- 2003 106 756
- US-A1- 2004 026 201
- PATENT ABSTRACTS OF JAPAN Bd. 009, Nr. 229 (M-413), 14. September 1985 (1985-09-14) & JP 60 084467 A (NISSAN JIDOSHA KK), 13. Mai 1985 (1985-05-13)
- PATENT ABSTRACTS OF JAPAN Bd. 017, Nr. 306 (M-1428), 11. Juni 1993 (1993-06-11) & JP 05 026324 A (MATSUSHITA ELECTRIC WORKS LTD), 2. Februar 1993 (1993-02-02)

## Beschreibung

Die Erfindung betrifft einen hydrodynamischen Drehmomentwandler, der ein gehäusefestes Pumpenrad, ein im Wesentlichen drehfest bezüglich einer Getriebeeingangswelle angeordnetes Turbinenrad und ein zwischen dem Pumpenrad und dem Turbinenrad über jeweils ein Axiallager abgestütztes und auf einer Freilaufvorrichtung gelagertes Leitrad aufweist, wobei beim Anbau des Wandlers an ein Getriebe der Freilauf- Innenring des Freilaufs drehfest auf eine nicht drehende Leitradhohlwelle aufgeschoben wird, welche am Getriebegehäuse befestigt ist.

Hydrodynamische Drehmomentwandler werden im Wesentlichen zur Übertragung eines Drehmoments von einer Kurbelwelle eines Motors auf eine Getriebeeingangswelle eingesetzt. Sie nehmen in einem Gehäuse ein gehäusefestes Pumpenrad, ein Turbinenrad und ein Leitrad auf. Der Drehmomentwandler ist in den Hydraulikkreislauf des Getriebes integriert und im Betriebe vollständig mit Hydraulikfluid gefüllt. Beim Start des Motors wird über die Kurbelwelle das Gehäuse des Drehmomentwandlers in Drehung versetzt und damit über das Pumpenrad die Hydraulikfüllung in Richtung des Turbinenrades bewegt. Hierdurch wird die Turbine angetrieben. Anschließend wird das Hydraulikfluid in Richtung des Leitrads und zwar entgegengesetzt zur Drehrichtung des Pumpenrads bewegt. Die Leitradschaufeln lenken die Strömung des Hydraulikfluids derart um, dass dieses in Drehrichtung des Pumpenrades strömt, was den Wirkungsgrad der Drehmomentübertragung des Drehmomentwandlers verbessert. Durch die Energie des Fluidstroms wird in der Turbine ein Moment erzeugt, welches über die Turbinenradnabe auf die Getriebeeingangswelle und damit das Getriebe abgeleitet wird.

Das Leitrad ist drehfest mit einem Freilauf-Außenring eines Freilaufs verbunden, dessen Freilauf- Innenring drehfest auf der Leitradhohlwelle sitzt. Zwischen dem Freilauf-Außenring und dem Freilauf- Innenring ist der eigentliche Freilaufmechanismus angeordnet. Dieser erlaubt eine Drehmomentübertragung vom Leitrad auf die Leitradhohlwelle nur in einer Richtung. Normalerweise ist das Leitrad über den Freilauf mit der Leitradhohlwelle in Eingriff, so dass es sich nicht relativ zu dem Getriebegehäuse drehen kann. Eine Drehmomentübertragung ist nur dann möglich, wenn Schlupf zwischen dem Pumpenrad und dem Turbinenrad vorliegt, der der Drehzahlwandlung entspricht. Wird die Drehzahldifferenz zwischen dem Pumpenrad und dem Turbinenrad aufgrund äußerer Betriebsbedingungen kleiner und damit die Drehzahlwandlung größer, so ändert sich die Anströmrichtung des Leitrades derart, dass sich die Momentrichtung des Leitrades umkehrt. Damit ergibt sich ein gegenüber dem Pumpenmoment geringeres Turbinenmoment, wodurch eine Drehmomentverstärkung nicht mehr gegeben wäre. Dies zu verhindern ist Aufgabe des Freilaufs.

Alle Teile eines Drehmomentwandlers müssen im Hinblick auf einen störungsfreien Einsatz in der Kraftfahrzeugtechnik und der damit verbundenen Serienproduktion nicht nur qualitätsgerecht gefertigt, sondern auch geführt und gelagert sein. Dies gilt auch für den Einbau des Drehmomentwandlers in das Getriebe. Hierzu wird zunächst ein an dem pumpenradseitigen Wandlergehäuse ausgebildeter Pumpenhals auf eine auf der Leitradhohlwelle des Getriebes angeordnete Gleitbuchse geschoben, wobei sich zugleich der Freilauf- Innenring des Freilaufs auf die Leitradhohlwelle schiebt. Der Freilauf- Innenring und die Leitradhohlwelle weisen zwecks drehfesten Verbindung hierzu eine miteinander korrespondierende Vielverzahnung auf, das heißt, der Freilauf- Innenring trägt eine Innenverzahnung und die Leitradhohlwelle am freien Ende eine entsprechende Außenverzahnung. Während dieses Einbauschrittes müssen kritischen Getriebebauteile unbedingt vor Beschädigung geschützt werden. Außerdem ist das Ziehen von Spänen aufgrund montagebedingter Drehbewegungen zu verhindern. Späne können die Laufeigenschaften des Getriebes erheblich beeinträchtigen. Ein besonders vorsichtiges und damit zeitaufwendiges Aufsetzen des Drehmomentwandlers auf die Leitradhohlwelle des Getriebes ist für eine Serienmontage unpraktikabel.

Aus der gattungsbildenden DE 197 56 684 A1 ist es ein Automatgetriebe bekannt mit einem Getriebegehäuse, einem Drehmomentwandler, einer Gleitbuchse zwischen dem Drehmomentwandler und der Leitradhohlwelle angeordnet ist und einen vom Wandlergehäuse abstrebenden Pumpenhals bekannt. Um zu verhindern, dass während des Aufschiebens des Drehmomentwandlers auf die Leitradhohlwelle im Montageprozess der Radialwellendichtring durch einen Radialversatz beschädigt werden kann, weist die Gleitbuchse in Montagerichtung des Drehmomentwandlers entgegen dem Getriebegehäuse einen sich wenigstens abschnittsweise über ihren Umfang erstreckenden Bund auf, mit dem bei der Montage eine Vorzentrierung des Drehmomentwandlers auf der Leitradhohlwelle erreicht wird, wodurch ein Radialversatz des Pumpenhalses vermieden wird. Eine Montagesicherung in axialer Richtung ist nicht vorgesehen.

Um kritische Stellen im Getriebe bei der Montage des Drehmomentwandlers gegen Beschädigung zu schützen und das Ziehen von Spänen aufgrund montagebedingter Drehbewegungen zu verhindern, ist es bereits bekannt, an der Leitradhohlwelle einen Außenbund vorzusehen, der einen axialen Anschlag im Prozess der Vormontage des Drehmomentwandlers an einem Bauteil des Drehmomentwandlers ausbildet. Der Drehmomentwandler kann somit maximal bis zum Anschlag am Außenbund der Leitradhohlwelle in das Getriebegehäuse eingeschoben werden. Schlägt der Außenbund beispielsweise an der der Leitradhohlwelle zugewandten Seite des Freilauf- Innenrings an, so hat das außerdem den Vorteil, dass keine Kontaktstellen mit Relativbewegung zwischen dem Drehmomentwandler und dem Getriebe vorhanden sind, da ja der Freilauf- Innenring drehfest auf der gleichfalls nicht drehenden Leitradhohlwelle sitzt. Nachteilig ist allerdings der Aufwand des zusätzlichen Außenbundes bei der Herstellung der Leitradhohlwelle. Zudem verengt ein Außenbund den Strömungsquerschnitt zwischen dem Pumpenhals und der Leitradhohlwelle, was konstruktive Folgemaßnahmen am Pumpenhals nach sich zieht. Außerdem ist diese Anschlaglösung auf der Wandlerseite höchst unflexibel, da bereits bei der Erstauslegung die Position des Freilauf- Innenrings fixiert werden muss. Eventuell notwendig werdende Änderungen sind sehr aufwendig, da auch die angrenzenden Bauteile mit geändert werden müssen.

Des Weiteren ist es bekannt, einen Anschlag zwischen der Turbinenradnabe des Turbinenrades und der Stirnseite der Leitradhohlwelle vorzusehen (DE 103 52 963 A1), wodurch das Vorsehen eines speziellen Bundes entfallen kann. Nachteilig ist dabei der in der Regel höhere Materialeinsatz, das damit verbundene höhere Gewicht und der Umstand, dass eine Relativbewegung an der Kontaktstelle zwischen der Turbinenradnabe und der Leitradhohlwelle unvermeidbar ist.

Der Erfindung liegt die Aufgabe zugrunde, zwecks Vermeidung von Beschädigungen und Spänen bei der Vormontage eines Drehmomentwandlers an ein Getriebe einen axialen Anschlag für die Leitradhohlwelle zu finden, der ohne material- und fertigungstechnischen Mehraufwand, ohne Nachteile für die Druckhydraulik, ohne Einbuße an Flexibilität bei der konstruktiven Auslegung eines Drehmomentwandlers und ohne mögliche Schäden durch Schneid- und Reibungseinwirkungen infolge Relativbewegungen an der Kontaktstelle zur Leitradhohlwelle auskommt.

Die Aufgabe wird erfindungsgemäß durch die Merkmale des Anspruchs 1 gelöst. Vorteilhafte Weiterbildungen geben die begleitenden Ansprüche an.

Der erfindungsgemäß gestaltete Freilauf- Innenring lässt sich ohne Mehraufwand im Vergleich zu einem herkömmlichen Freilauf- Innenring ohne Bund fertigen. Beispielsweise wird er durch ein Pressverfahren, wie Rückwärtsfließpressen, oder im Sinterverfahren hergestellt. Der zusätzliche Materialbedarf für den Innenbund ist äußerst gering und liegt noch unter dem, der für einen Außenbund an der Leitradhohlwelle anzusetzen wäre. Durch den Innenbund wird ferner der Strömungsquerschnitt zwischen dem Pumpenhals und der Leitradhohlwelle nicht beeinflusst. Es kann auch keine Relativbewegung zwischen dem Freilauf- Innenring und der Leitradhohlwelle zustande kommen und die Position des Freilauf- Innenrings braucht nicht schon bei der Erstauslegung festgelegt werden.

Anhand eines Ausführungsbeispiels soll nachstehend die Erfindung näher erläutert werden. Die dazugehörige Zeichnung en zeigen in:
- Fig. 1: einen Teilquerschnitt an der Kuppelstelle zwischen einem Drehmomentwandler und einem Fahrzeuggetriebe und
- Fig. 2: einen Freilauf- Innenring im radialen und axialen Schnitt.

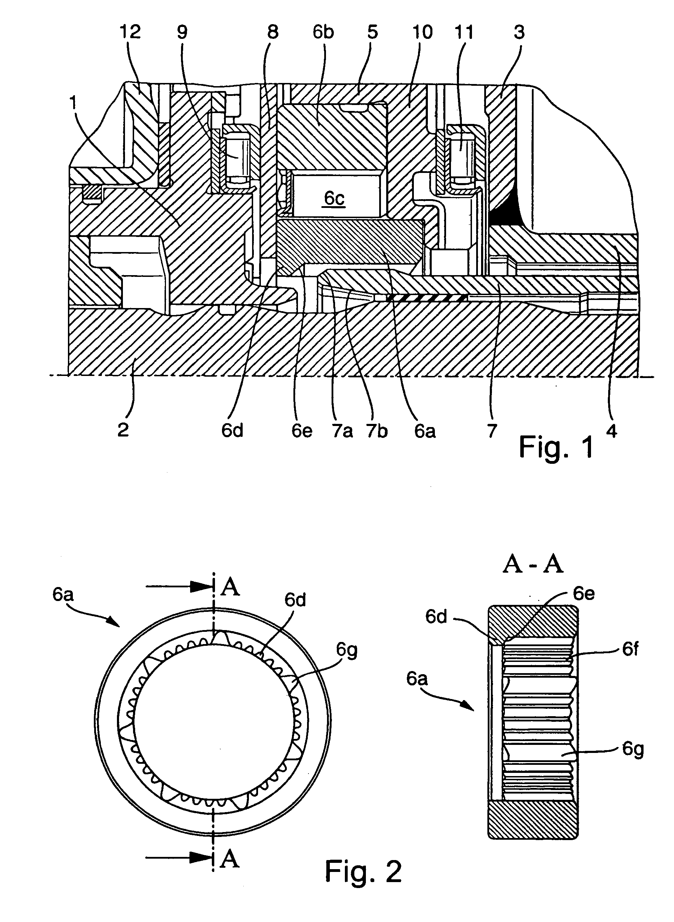

Der in Figur 1 dargestellte Ausschnitt zeigt eine Turbinenradnabe 1 eines nur teilweise dargestellten Drehmomentwandlers, welche radial nach außen ein nicht dargestelltes Turbinenrad trägt, dessen Drehmoment über die Turbinenradnabe 1 auf eine Getriebeeingangswelle 2 und damit auf ein weiter nicht dargestelltes Getriebe abgeleitet wird. Entgegengesetzt zur Turbinenradnabe 1 ist eine Pumpenradaußenschale 3 schematisch gezeichnet, von welcher ein Pumpenhals 4 in Richtung des Getriebes abstrebt und im Getriebegehäuse drehend und abdichtend lagerbar ist. Die Pumpenradaußenschale 3 ist in nicht näher dargestellter Weise mit einer motorseitigen Gehäuseschale 12 des Drehmomentwandlers zu einem toroidartigen Gehäuse verschweißt, das den Drehmomentwandler fluiddicht umhüllt, wobei der Pumpenhals 4 am Getriebegehäuse abschließt. Zwischen der Pumpenradaußenschale 3 und einer nicht dargestellten Pumpenradinnenschale sind Schaufelbleche drehfest angeordnet, die das Pumpenrad ausbilden, welches bei Drehung einen Fluidstrom innerhalb des Drehmomentwandlers antreibt, der wiederum das Turbinenrad antreibt, welches genau wie das Pumpenrad eine Außenschale und eine Innenschale aufweist, zwischen denen Schaufelblätter befestigt sind. Radial innen zwischen dem Pumpenrad und dem Turbinenrad ist auf einer Leitradnabe 5 ein nicht weiter dargestelltes Leitrad befestigt, das ebenfalls eine Leitradaußenschale, eine Leitradinnenschale und dazwischen befestigte Schaufelblätter aufweist. Die Leitradnabe steht über einen Freilauf 6 mit der feststehenden Leitradhohlwelle 7 in Wirkverbindung, um das Hydraulikfluid vom Turbinenrad zum Pumpenrad zu lenken.

Der Freilauf 6 besteht aus einem Freilauf- Innenring 6a, einem Freilauf- Außenring 6b und einem zwischen dem Freilauf- Innenring 6a und dem Freilauf- Außenring 6b angeordneten eigentlichen Freilauf- Kupplungsmechanismus 6c. Die Stirnseiten des Freilauf- Innenrings 6a und des Freilauf- Außenrings 6b auf der Motorseite befinden sich mit einem Anschlag 8 in Kontakt, welcher durch die Turbinenradnabe 1 über ein Axialrollenlager 9 abgestützt ist. Die getriebeseitigen Stirnflächen des Freilauf- Innenrings 6a und des Freilauf- Außenringes 6b befinden sich mit einer Axialschubabstützung 10 der Leitradnabe 5 in Kontakt, welche durch den Pumpenhals 4 über ein weiteres Axialrollenlager 11 abgestützt ist. Auf diese Weise wird die Bewegung der Leitradnabe 5 mit dem Leitrad in axialer Richtung zwischen der Turbinenradnabe 1 und dem Pumpenhals 4 durch die Axialrollenlager 9, 11 begrenzt. Der Freilauf-Innenring 6a trägt auf seinem inneren Umfang eine noch näher zu beschreibende Innenverzahnung für den Eingriff einer Außenverzahnung auf dem äußeren Umfang des freien Endes der Leitradhohlwelle 7. Der Freilauf- Außenring 6b ist am inneren Umfangsbereich der Leitradnabe 5 befestigt, beispielsweise durch Verstemmen. Der Freilauf- Kupplungsmechanismus 6c, beispielsweise ein Wälzkörpermechanismus, lässt die Drehung des Leitrads in nur einer Richtung zu.

Erfindungsgemäß trägt der Freilauf- Innenring 6a motorseitig einen angeformten Innenbund 6d. Da von Haus aus der Freilauf- Innenring 6a in Achsrichtung gesehen häufig eine größere Länge aufweist als der Freilauf- Innenring 6b, geht der Bund 6d nicht zu Lasten der Drehfestigkeit der Verbindung zwischen dem Freilauf- Innenring 6a und der Leitradhohlwelle 7.

Zwecks Montage des Drehmomentwandlers an das bereits in das Kraftfahrzeug eingebaute Getriebe wird der Drehmomentwandler mit dem Pumpenhals in ein Lager des Getriebegehäuses eingeschoben, wobei auch die Innenverzahnung des Freilauf- Innenrings 6a die Außenverzahnung auf der Leitradhohlwelle 7 finden muss. Der Innenbund 6d dient im Vormontageprozess als Montageanschlag für die Stirnseite des freien Endes der Leitradhohlwelle 7. Hierdurch werden mit geringstem Aufwand, aber wirkungsvoll, Montageschäden vermieden, die dadurch zustande kommen könnten, dass der Drehzahlwandler zu tief in das Getriebe eingeschoben wird.

Eine für das Finden der Leitradhohlwelle 7 im Freilauf- Innenring 6a während des Aufsteckens nützliche Schräge 7a auf der Stirnseite der Leitradhohlwelle 7 korrespondiert mit einer Schräge 6e am Innenbund 6d des Freilauf- Innenrings 6a. In weiterer Ausgestaltung weist die Leitradhohlwelle 7 stirnseitig einen Innenkonus 7b auf, der ein Anschlagen der Turbinenradnabe 1 an der freien Stirnseite der Leitradhohlwelle 7 vermeidet.

In der Figur 2 ist der erfindungsgemäße Freilauf- Innenring als Einzelheit im radialen und axialen Schnitt dargestellt. Position 6d kennzeichnet den Innenbund, 6e die Schräge auf der Innenseite des Innenbundes 6d, gegen welche die Leitradhohlwelle 7 bei der Vormontage des Drehmomentwandlers maximal anlaufen kann. Die Verzahnung auf dem Innenumfang des Freilauf- Innenringes 6a besteht aus über den Innenumfang verteilte flachere und tiefere keilförmige Einschnitten 6f, 6g, Hiermit konform geht die Zahnteilung auf der Leitradhohlwelle 7.

### Bezugszeichenliste

- 1: Turbinenradnabe
- 2: Getriebeeingangswelle
- 3: Pumpenradaußenschale
- 4: Pumpenhals
- 5: Leitradnabe
- 6: Freilauf
- 6a: Freilauf- Innenring
- 6b: Freilauf- Außenring
- 6c: Freilauf- Kupplungsmechanismus
- 6d: Innenbund am Freilauf- Innenring
- 6e: Schräge am inneren Innenbund
- 6f: flache keilförmige Einschnitte
- 6g: tiefe keilförmige Einschnitte
- 7: Leitradhohlwelle
- 7a: Schräge auf der Stirnseite der Leitradhohlwelle
- 7b: Innenkonus auf der Stirnseite der Leitradhohlwelle
- 8: Anschlag
- 9: Axialrollenlager
- 10: Axialschubabstützung
- 11: Axialrollenlager
- 12: Gehäuseschale motorseitig

## Patentansprüche

1. Hydrodynamischer Drehmomentwandler, der ein gehäusefestes Pumpenrad (3), ein im Wesentlichen drehfest bezüglich einer Getriebeeingangswelle (2) angeordnetes Turbinenrad (1) und ein zwischen dem Pumpenrad (3) und dem Turbinenrad (1) über jeweils ein Axiallager (9,11) abgestütztes und auf einer Freilaufvorrichtung (6) gelagertes Leitrad (5) aufweist, und wobei beim Anbau des Drehmomentwandlers an ein Getriebe der Freilauf-Innenring (6a) des Freilaufs drehfest auf eine nicht drehende Leitradhohlwelle (7) aufgeschoben wird, welche am Getriebegehäuse befestigt ist, **dadurch gekennzeichnet, dass** der Freilauf- Innenring (6a) auf der der Leitradhohlwelle (7) abgewandten Stirnseite einen Innenbund (6d) trägt, der einen Montageanschlag für das freie Ende der Leitradhohlwelle (7) ausbildet.

2. Hydrodynamischer Drehmomentwandler nach Anspruch 1, **dadurch gekennzeichnet, dass** der Freilauf-Innenring (6a) bis zur Höhe des Innenbundes (6d) eine Innenverzahnung (6f, 6g) aufweist, welche im montierten Zustand des Drehmomentwandlers mit einer entsprechenden Außenverzahnung auf der Leitradhohlwelle (7) in Eingriff steht.

3. Hydrodynamischer Drehmomentwandler nach Anspruch 1 oder Anspruch 2, **dadurch gekennzeichnet, dass** der Innenbund (6d) eine Schräge (6e) aufweist, die mit einer Schräge (7a) auf der Stirnseite der Leitradhohlwelle (7) korrespondiert.

4. Hydrodynamischer Drehmomentwandler nach einem der vorstehenden Ansprüche, **dadurch gekennzeichnet, dass** der Freilauf-Innenring (6a) über einen Freilaufmechanismus (6c) auf einen Freilauf-Außenring (6b) arbeitet, der mit der Leitradnabe (7) verstemmt ist.

5. Hydrodynamischer Drehmomentwandler nach einem der vorstehenden Ansprüche, **dadurch gekennzeichnet, dass** der Freilauf-Innenring (6a) eine im Vergleich zum Freilauf- Außenring (6b) größere axiale Länge aufweist.

6. Hydrodynamischer Drehmomentwandler nach einem der vorstehenden Ansprüche, **dadurch gekennzeichnet, dass** der Freilauf-Innenring (6a) gepresst oder gesintert ist.

7. Hydrodynamischer Drehmomentwandler nach Anspruch 1, **dadurch gekennzeichnet, dass** die Leitradhohlwelle (7) einen Innenkonus (7b) aufweist, der ein Anschlagen der Turbinenradnabe (1) an der Leitradhohlwelle (7) vermeidet.

8. Hydrodynamischer Drehmomentwandler nach Anspruch 1, **dadurch gekennzeichnet, dass** der Freilauf (6c) in Achsrichtung zwischen eine Axialschubabstützung (10) der Leitradnabe (5) und einen Anschlag (8) gespannt ist.

## Claims

1. Hydrodynamic torque converter which has a pump wheel (3) which is fixed to the housing, a turbine wheel (1) which is arranged so as to be substantially rotationally fixed with respect to a transmission input shaft (2), and a guide wheel (5) which is supported between the pump wheel (3) and the turbine wheel (1) by means of in each case one axial bearing (9, 11) and which is mounted on a freewheel device (6), and with the freewheel inner ring (6a) of the freewheel being pushed, during the attachment of the torque converter to a transmission, in a rotationally fixed manner onto a non-rotating guide wheel hollow shaft (7) which is fastened to the transmission housing, **characterized in that** the freewheel inner ring (6a) supports, on the end side facing away from the guide wheel hollow shaft (7), an inner collar (6d) which forms an assembly stop for the free end of the guide wheel hollow shaft (7).

2. Hydrodynamic torque converter according to Claim 1, **characterized in that** the freewheel inner ring (6a) has, up to the level of the inner collar (6d), an internal toothing (6f, 6g) which, in the assembled state of the torque converter, engages with a corresponding external toothing on the guide wheel hollow shaft (7).

3. Hydrodynamic torque converter according to Claim 1 or Claim 2, **characterized in that** the inner collar (6b) has a bevel (6e) which corresponds to a bevel (7a) on the end side of the guide wheel hollow shaft (7).

4. Hydrodynamic torque converter according to one of the preceding claims, **characterized in that** the freewheel inner ring (6a) acts via a freewheel mechanism (6c) on a freewheel outer ring (6b) which is calked with the guide wheel hub (5).

5. Hydrodynamic torque converter according to one of the preceding claims, **characterized in that** the freewheel inner ring (6a) has a greater axial length than the freewheel outer ring (6b).

6. Hydrodynamic torque converter according to one of the preceding claims, **characterized in that** the freewheel inner ring (6a) is pressed or sintered.

7. Hydrodynamic torque converter according to Claim 1, **characterized in that** the guide wheel hollow shaft (7) has an internal cone (7b) which prevents the turbine wheel hub (1) from striking against the guide wheel hollow shaft (7).

8. Hydrodynamic torque converter according to Claim 1, **characterized in that** the freewheel (6c) is clamped in the axial direction between an axial thrust support (10) of the guide wheel hub (5) and a stop (8).

## Revendications

1. Convertisseur de couple hydrodynamique, qui présente une roue de pompe (3) fixée au boîtier, une roue de turbine (1) disposée essentiellement de manière non rotative par rapport à un arbre d'entrée de boîte de vitesses (2) et une roue directrice (5) supportée par le biais d'un palier axial (9, 11) respectif entre la roue de pompe (3) et la roue de turbine (1) et montée sur un dispositif de roue libre (6), lors de l'installation du convertisseur de couple sur une boîte de vitesses, la bague interne de roue libre (6a) de la roue libre étant poussée de manière non rotative sur un arbre creux de roue directrice (7) non rotatif, qui est fixé sur le boîtier de la boîte de vitesses, **caractérisé en ce que** la bague interne de roue libre (6a) porte un épaulement interne (6d) sur le côté frontal opposé à l'arbre creux de roue directrice (7), lequel épaulement constitue une butée de montage pour l'extrémité libre de l'arbre creux de roue directrice (7).

2. Convertisseur de couple hydrodynamique selon la revendication 1, **caractérisé en ce que** la bague interne de roue libre (6a) présente une denture interne (6f, 6g) jusqu'à la hauteur de l'épaulement interne (6d), laquelle est en prise dans l'état monté du convertisseur de couple avec une denture externe correspondante sur l'arbre creux de roue directrice (7).

3. Convertisseur de couple hydrodynamique selon la revendication 1 ou 2, **caractérisé en ce que** l'épaulement interne (6d) présente un biseau (6e) qui correspond à un biseau (7a) sur le côté frontal de l'arbre creux de roue directrice (7).

4. Convertisseur de couple hydrodynamique selon l'une quelconque des revendications précédentes, **caractérisé en ce que** la bague interne de roue libre (6a) fonctionne par le biais d'un mécanisme de roue libre (6c) sur une bague externe de roue libre (6b) qui est connectée au moyeu de roue directrice (5) par matage.

5. Convertisseur de couple hydrodynamique selon l'une quelconque des revendications précédentes, **caractérisé en ce que** la bague interne de roue libre (6a) présente une plus grande longueur axiale que la bague externe de roue libre (6b).

6. Convertisseur de couple hydrodynamique selon l'une quelconque des revendications précédentes, **caractérisé en ce que** la bague interne de roue libre (6a) est pressée ou frittée.

7. Convertisseur de couple hydrodynamique selon la revendication 1, **caractérisé en ce que** l'arbre creux de roue directrice (7) présente un cône interne (7b) qui évite une butée du moyeu de la roue de turbine (1) contre l'arbre creux de roue directrice (7).

8. Convertisseur de couple hydrodynamique selon la revendication 1, **caractérisé en ce que** la roue libre (6c) est tendue dans la direction axiale entre un support de poussée axiale (10) du moyeu de la roue directrice (5) et une butée (8).
